# EUROPÄISCHE PATENTSCHRIFT

(11) **EP 0 446 691 B1**
(45) Veröffentlichungstag und Bekanntmachung des Hinweises auf die Patenterteilung: **06.07.1994**
(21) Anmeldenummer: 91102691.2
(22) Anmeldetag: 23.02.1991
(51) Int. Cl.: G01D 5/38

(54) **Optische Vorrichtung**
Optical device
Dispositif optique

(30) Priorität: 13.03.1990 DE 4007968
(43) Veröffentlichungstag der Anmeldung: 18.09.1991
(73) Patentinhaber: Dr. Johannes Heidenhain GmbH, D-83292 Traunreut (DE)
(72) Erfinder: Huber, Walter, Dipl.-Ing. (FH), W-8220 Traunstein (DE)

(56) Entgegenhaltungen:
- EP-A- 0 333 929
- DE-A- 2 229 996
- DE-A- 2 362 731
- "Dreigitterschrittgeber", Dissertation von Dipl.-Ing. Jörg Willhelm, 1978, Fakultät für Maschinenwesen der TU Hannover

## Beschreibung

Die Erfindung bezieht sich auf eine optische Vorrichtung nach dem Oberbegriff des Anspruches 1.

Derartige Vorrichtungen sind als interferentiell arbeitende Längen- oder Winkelmeßeinrichtungen aus einer Vielzahl von Druckschriften bekannt.

Als Beispiele seien die DE-A1 36 33 574 sowie die EP-A1 0 163 362 genannt. In der letztgenannten Schrift ist eine Positionsmeßeinrichtung beschrieben, bei der das Indexgitter ein Phasengitter ist, bei dem durch Variation des Steg zu Furche-Verhältnisses und der Phasentiefe das Intensitätsverhältnis von zwei gebeugten Teilstrahlen unterschiedlicher Ordnung und die Phasenbeziehung zwischen der 0. und der 1. Ordnung eingestellt werden kann.

Bei Meßsystemen, die auf der Zweistrahlinterferenz von Teilstrahlen unterschiedlicher Beugungsordnungen beruhen, besitzen Phasengitter dieser Art den erheblichen Nachteil sehr unterschiedlicher Beugungswirkungsgrade, was zu einem schlechten Modulationsgrad führt.

Aufgabe der Erfindung ist, für Vorrichtungen der eingangs genannten Art, die auf der Zweistrahlinterferenz beruhen, ein Rekombinationsgitter zu schaffen, das diesen Nachteil nicht besitzt, und das so gestaltet ist, daß durch Interferenz der gebeugten Teilstrahlenbündel sowohl gleich große Signale, die definierte Phasenbeziehungen zueinander aufweisen, als auch gleiche Modulationsgrade erzeugt werden können.

Diese Aufgabe wird von einer Vorrichtung mit den Merkmalen des Anspruches 1 gelöst.

Vorteile der Erfindung liegen im besseren Wirkungsgrad und der größeren Zuverlässigkeit, weil der Modulationsgrad der Interferenzsignale erheblich gesteigert werden kann.

Vorteilhafte Ausgestaltungen der Erfindung sind in den abhängigen Ansprüchen angegeben.

Mit Hilfe von Ausführungsbeispielen soll die Erfindung anhand der Zeichnungen noch näher erläutert werden.

Es zeigt
- Figur 1: eine schematische Darstellung einer Positionsmeßeinrichtung;
- Figur 2: eine Variante einer Positionsmeßeinrichtung;
- Figur 3: eine Positionsmeßeinrichtung in Auflichtanordnung;
- Figur 4: verschiedene Beugungsgitterquerschnitte;
- Figur 5: ein Beugungsgitter mit unsymmetrisch angeordneten Gittersprungstellen und
- Figur 6: einen weiteren Beugungsgitterquerschnitt.

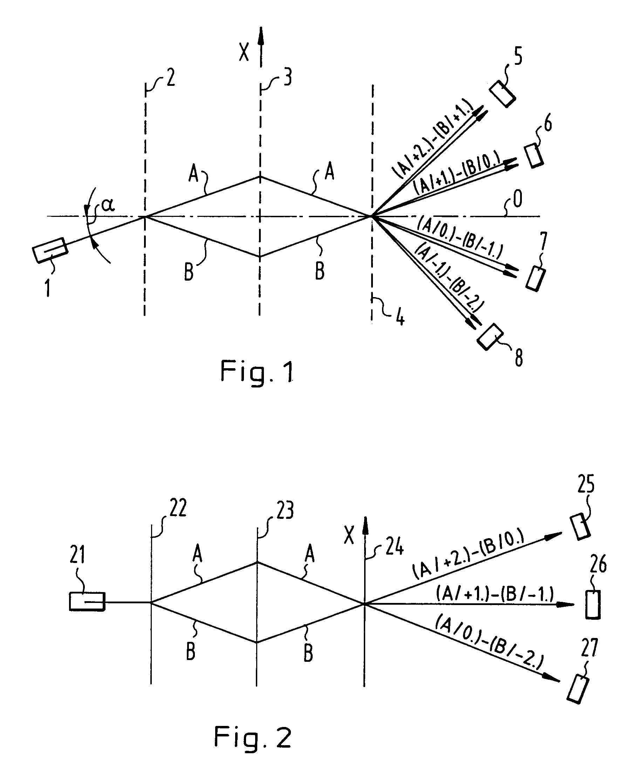

Bei der in Figur 1 dargestellten Positionsmeßeinrichtung in Durchlicht-Anordnung wird von einer Lichtquelle 1, die schmalbandiges Licht aussendet, ein Phasengitter 2 unter einem Winkel α zur Gitternormalen 0 beleuchtet. Der Winkel α bestimmt sich nach der Formel sinα = l/2 d, wobei l die Wellenlänge des verwendeten Lichtes und d die Teilungsperiode ist. Hinter dem Phasengitter 2 entstehen durch Beugung zwei Teilstrahlenbündel A und B der Beugungsordnungen "0" und "1". Diese Teilstrahlenbündel A und B treffen auf ein weiteres Gitter 3, das vorzugsweise ebenfalls als Phasengitter ausgebildet ist. Dieses Phasengitter 3 ist so ausgelegt, daß keine nullte Beugungsordnung entsteht. Diese Auslegung kann in bekannter Weise durch die Wahl der Gitterparameter des Phasengitters 3 erfolgen. Von den am Phasengitter 3 durch Beugung entstehenden Teilstrahlenbündeln werden nur die zur Gitternormalen 0 hingebeugten Teilstrahlenbündel A und B verwendet. Die Teilstrahlenbündel A und B treffen auf ein weiteres Phasengitter 4 und werden dort wiederum gebeugt. Hinter dem Phasengitter 4 erhält man also gebeugte Teilstrahlenbündel (A/+2.)-(B/+1.), (A/+1.)-(B/0.), (A/0.)-(B/-1.), (A(-1.)-(B/-2.). Jeweils zwei der Teilstrahlenbündel haben die gleiche Richtung und können somit miteinander interferieren.

Bei Verschiebung des Phasengitters 3 gegenüber den Phasengittern 2 und 4 erhalten die am Phasengitter 3 gebeugten Teilstrahlenbündel A und B eine Phasenverschiebung. Durch Verschiebung des Gitters 3 um eine Teilungsperiode entstehen hinter dem Gitter 4 zwei vollständige sinusförmige Intensitätsmodulationen. Zweck des Phasengitters 4 ist es, in den ausgewählten Richtungen die gewünschten Intensitäten und Modulationsgrade sowie zwischen diesen ausgewählten Richtungen die gewünschten Phasenbeziehungen zu erzeugen.

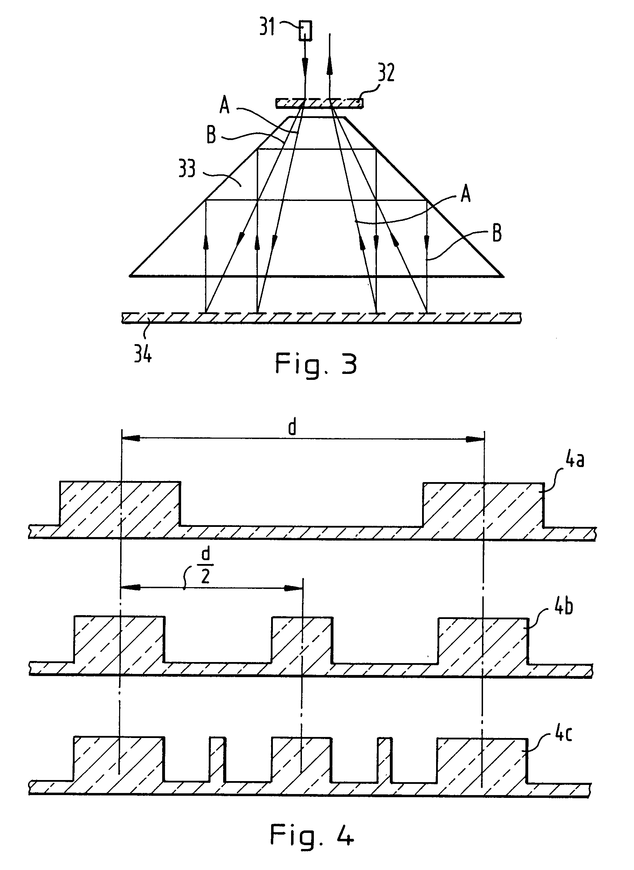

Das Phasengitter 4 und seine Varianten sind in den Figuren 4, 5 und 6 gezeigt und werden später beschrieben.

Die interferierenden Teilstrahlenbündel fallen auf Fotoelemente 5, 6, 7, 8 und werden in elektrische Signale umgewandelt, die bei inkrementalen Positionsmeßeinrichtungen in bekannter Weise ausgewertet werden.

In Figur 2 ist noch stärker schematisiert eine Variante einer Positionsmeßeinrichtung dargestellt, bei der das rückmischende Beugungsgitter in X-Richtung beweglich ist. Damit soll deutlich gemacht werden, daß es unerheblich ist, welches der Gitter bewegt wird - also den Maßstab bildet.

Die in Figur 2 schematisch dargestellte Positionsmeßeinrichtung weist eine Beleuchtungseinrichtung 21 auf, von deren Beleuchtungsstrahlengang zwei interferenzfähige Strahlenbündel A und B durch Aufspaltung an einem Phasengitter 22 und nachfolgende Umlenkung an einem zweiten Gitter 23 gebildet werden. Diese interferieren bei dem Durchgang durch ein weiteres Phasengitter 24 miteinander. Die gebeugten und interferierenden Teilstrahlenbündel (A/+2.)-(B/0.), (A/+1.)-(B/-1.), (A/0.)-(B/-2.) treffen auf Detektoreinrichtungen 25, 26, 27, die sie in zueinander phasenverschobene Meßsignale umwandeln.

Abweichend von den gezeigten Durchlicht-Ausführungsbeispielen ist die Erfindung auch bei Auflichtgeräten realisierbar, was eine geänderte geometrische Anordnung der Bauelemente erfordert.

Diese Variante ist in Figur 3 in Analogie zu den bereits beschriebenen gezeigt. Entsprechenden Bauelementen ist auch hier wieder der Figurenindex voran gestellt.

Von einer Lichtquelle 31 kommend wird ein Beleuchtungsstrahl von einem Phasengitter 32 in Teilstrahlenbündel A und B aufgespalten, die in unterschiedliche Richtungen laufen.

Das Besondere an diesem Ausführungsbeispiel ist ein Tripelprisma 33, welches sich zwischen den Beugungsgittern 32 und 34 befindet. Bei diesem Tripelprisma 33 ist die Spitze entfernt, und die Teilstrahlenbündel A und B treten - nicht wie üblich an der Basis, sondern - an der der Basis gegenüberliegenden Fläche ein, die durch die Kappung der Spitze entstanden ist.

Ohne Berücksichtigung der unterschiedlichen Brechnungsindizes - die hier, wie auch bei den anderen Ausführungsbeispielen vernachlässigt werden können - durchlaufen die Teilstrahlenbündel A und B unbeeinflußt das Tripelprisma sozusagen von rückwärts und treffen auf das Phasengitter 34, das in diesem Fall als Reflexionsgitter ausgebildet ist. An diesem Reflexionsgitter 34 werden die Teilstrahlenbündel A und B durch Beugung parallel zueinander ausgerichtet und treten nun, von der Basis her ins Tripelprisma 33 ein. Sie durchlaufen das Tripelprisma 33 und treffen als parallele Teilstrahlenbündel A und B wieder auf das Reflexionsgitter 34. Dort werden sie wieder gebeugt und durch die der Basis des Tripelprismas 33 gegenüberliegende Fläche auf das Phasengitter 32 reflektiert. Dort interferieren sie und die Hell- Dunkelmodulation kann detektiert werden.

Abstandsänderungen der beiden Phasengitter 32 und 34 führen in diesem Beispiel zu proportionalen Gangunterschiedsdifferenzen der interferierenden Teilstrahlenbündel A und B, deren Hell- Dunkelmodulation das Abstands- Meßsignal liefert.

In Figur 4 sind verschiedene Querschnitte durch Phasengitter gezeigt, wie sie als Beugungsgitter 4, 24, 32, 34 in den Ausführungsbeispielen realisiert sein können.

Bei gegebener Teilungsperiode d sind im ersten Beispiel aus Figur 4 die Stege des Phasengitters 4a schmaler als die Furchen. Das Steg-/Furchenverhältnis weicht also merklich von 1 : 1 ab.

Im zweiten Beispiel ist das Phasengitter 4b bei gleicher Teilungsperiode d anders strukturiert; es weist doppelt so viele Gittersprungsstellen auf, wie das erste Phasengitter 4a. Durch einen zusätzlichen Steg innerhalb der Teilungsperiode d wird dies erreicht. Das Profil bleibt allerdings symmetrisch.

Ein drittes Beispiel zeigt ein noch weiter strukturiertes Phasengitter 4c, bei dem die Anzahl der Gittersprungstellen innerhalb der Teilungsperiode d nochmals verdoppelt ist. Obwohl das Profil symmetrisch bleibt, können die Positionen der Gittersprungstellen beliebig verteilt sein.

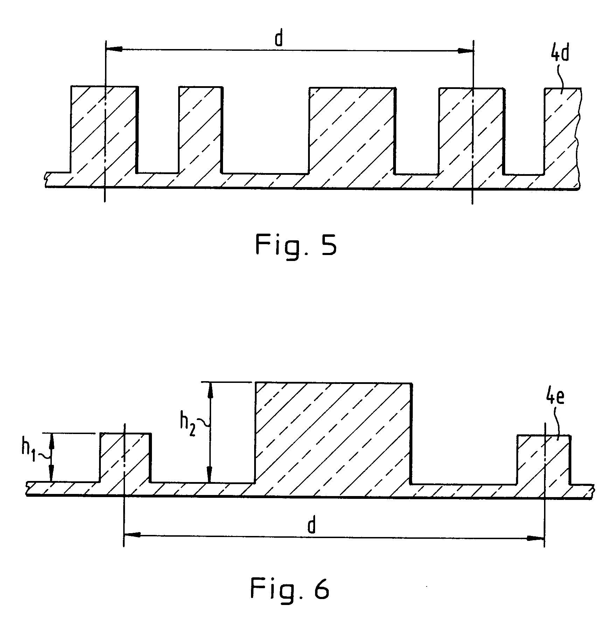

Die in dieser Weise strukturierten Phasengitter können zwar innerhalb der Teilungsperiode symmetrisch sein, sie müssen aber nicht symmetrisch sein, wie das Phasengitter 4d in Figur 5 zeigt.

Die Strukturierung dieser Phasengitter wird nach mathematischen Gesetzmäßigkeiten vorgenommen und es lassen sich mehrere Intensitätsverhältnisse von in unterschiedliche Ordnungen gebeugten Teilstrahlenbündeln und die Phasenwinkel zwischen den verschiedenen Beugungsordnungen einstellen.

Wenn bei einem Phasengitter 4e gemäß Figur 6 zusätzlich zu der vorbeschriebenen Strukturierung auch noch die Höhe h1, h2 der Stege d. h. die Phasentiefe variiert, lassen sich auch zwischen den höheren Beugungsordnungen beliebige Phasenbeziehungen einstellen.

## Patentansprüche

1. Optische Vorrichtung, insbesondere Längen- oder Winkelmeßeinrichtung, zum Erzeugen von Zweistrahlinterferenzen mittels eines Beugungsgitters, bei der mehrere interferenzfähige Strahlenbündel am Beugungsgitter vereinigt und zur Interferenz gebracht werden, dadurch gekennzeichnet, daß die physikalischen Eigenschaften des als Phasengitter (4, 24, 32, 34) ausgebildeten Beugungsgitters so gewählt sind, daß die Phasenwinkel zwischen den jeweils Zweistrahlinterferenzen bildenden Teilstrahlenbündeln unterschiedlicher Beugungsordnungen und deren gegenseitige Intensitätsverhältnisse zueinander einstellbar sind.

2. Optische Vorrichtung nach Anspruch 1, dadurch gekennzeichnet, daß das Phasengitter (4b, 4c, 4d, 4e) innerhalb einer Teilungsperiode (d) mehr als zwei Gittersprungstellen aufweist.

3. Optische Vorrichtung nach Anspruch 2, dadurch gekennzeichnet, daß die Gittersprungstellen unterschiedliche Abstände zueinander haben.

4. Optische Vorrichtung nach Anspruch 2, dadurch gekennzeichnet, daß die Phasentiefe zwischen jeweils benachbarten Gittersprungstellen unterschiedlich ist.

5. Optische Vorrichtung nach Anspruch 2, dadurch gekennzeichnet, daß die Gittersprungstellen innerhalb der Teilungsperiode (d) symmetrisch angeordnet sind.

6. Optische Vorrichtung nach Anspruch 2, dadurch gekennzeichnet, daß die Verteilung der Gittersprungstellen innerhalb der Teilungsperiode (d) unsymmetrisch ist.

## Claims

1. Optical device, in particular length or angle measuring device, for producing two-beam interference by means of a diffraction grid, in which several beams capable of interference are combined at the diffraction grid and caused to interfere, characterised in that the physical properties of the diffraction grid, which is constructed as a phase grid (4, 24, 32, 34), are selected in such a way that the phase angles between the partial beams of different diffraction orders which respectively form two-beam interference and the reciprocal intensity ratios thereof relative to each other are variable.

2. Optical device according to claim 1, characterised in that the phase grid (4b, 4c, 4d, 4e) within a period of graduation (d) has more than two grid irregularities.

3. Optical device according to claim 2, characterised in that the grid irregularities are different distances apart from each other.

4. Optical device according to claim 2, characterised in that the phase depth is different between respectively adjacent grid irregularities.

5. Optical device according to claim 2, characterised in that the grid irregularities are arranged symmetrically within the period of graduation (d).

6. Optical device according to claim 2, characterised in that the distribution of the grid irregularities within the period of graduation (d) is asymmetrical.

## Revendications

1. Dispositif optique, en particulier dispositif de mesure de longueur ou d'angle, pour produire des interférences de deux rayons au moyen d'un réseau de diffraction, dispositif dans lequel plusieurs faisceaux de rayons susceptibles d'interférer sont réunis et sont amenés à interférer sur le réseau de diffraction caractérisé par le fait que les caractéristiques physiques du réseau de diffraction réalisé sous forme de réseau de phase (4, 24, 32, 34) sont choisies de manière que les angles de phase entre les faisceaux de rayons partiels d'ordres de diffraction différents, formant respectivement des interférences de deux rayons, et les rapports d'intensités réciproques de ces faisceaux, soient réglables.

2. Dispositif optique suivant revendication 1, caractérisé par le fait que le réseau de phase (4b,4c,4d,4e) présente plus de deux points de discontinuité de réseau à l'intérieur d'une période de division (d).

3. Dispositif optique suivant revendication 2, caractérisé par le fait que les points de discontinuité de réseau présentent des distances réciproques différentes.

4. Dispositif optique suivant revendication 2, caractérisé par le fait que la profondeur de phase entre des points voisins de discontinuité de réseau est différente.

5. Dispositif optique suivant revendication 2, caractérisé par le fait que les points de discontinuité de réseau sont disposés symétriquement à l'intérieur de la période de division (d).

6. Dispositif optique suivant revendication 2, caractérisé par le fait que la répartition des points de discontinuité de réseau est asymétrique à l'intérieur de la période de division (d).
